# EUROPÄISCHE PATENTSCHRIFT

(11) **EP 3 242 056 B1**
(45) Veröffentlichungstag und Bekanntmachung des Hinweises auf die Patenterteilung: **24.10.2018**
(21) Anmeldenummer: 17168672.8
(22) Anmeldetag: 28.04.2017
(51) Int. Cl.: F16H 7/02, F16H 7/18

(54) **EINGREIFSCHUTZ FÜR RIEMENANTRIEB**
HAND PROTECTION FOR BELT DRIVE
PROTECTION CONTRE LA MISE EN PRISE POUR UN ENTRAÎNEMENT PAR COURROIE

(30) Priorität: 02.05.2016 DE 102016108135
(43) Veröffentlichungstag der Anmeldung: 08.11.2017
(73) Patentinhaber: WIPOTEC GmbH, 67657 Kaiserslautern (DE)
(72) Erfinder: Edrich, Andreas, 66424 Homburg (DE); Wagner, Markus, 67659 Kaiserslautern (DE)
(74) Vertreter: Eder Schieschke & Partner mbB

(56) Entgegenhaltungen:
- DE-A1- 4 111 063
- DE-A1- 10 247 419
- DE-A1-102005 055 754
- DE-U1- 29 621 831
- US-A- 5 246 406

## Beschreibung

Die vorliegende Erfindung betrifft einen Eingreifschutz für Riemenantriebe, der trotz guter Einsehbarkeit und Erreichbarkeit des Riemens den versehentlichen oder sogar vorsätzlichen Eingriff in den Riemenantrieb zuverlässig verhindert.

Riemenantriebe sind aus unterschiedlichen technischen Bereichen bekannt und umfassen eine auf einer ersten Achse angeordnete und angetriebene erste Riemenscheibe und eine auf einer zweiten Achse angeordnete zweite Riemenscheibe, welche mittels eines beide Riemenscheiben umlaufenden Riemens angetrieben wird. Beide Achsen erstrecken sich parallel zueinander in einer Richtung (Y) und sind in einer dazu senkrechten Richtung Z zueinander beabstandet. Eine dritte Richtung X erstreckt sich senkrecht zu beiden Richtungen Y und Z.

Bei solchen Riemenantrieben können unterschiedliche Riemen (Flachriemen, Keilriemen, Zahnriemen, etc.), alternativ auch Ketten, zum Einsatz kommen. Zwischen den Riemenscheiben (die im Folgenden auch Zahnräder bzw. Ritzel umfassen sollen) besteht bei einem sogenannten "offenen" Riemenantrieb, bei dem beide Achsen parallel verlaufen, ein vom umlaufenden Riemen seitlich begrenzter Raum, im Weiteren auch Füllraum R genannt. Je nach Art des Riemens und seiner Umlaufgeschwindigkeit besteht dabei das Risiko, dass ein Gegenstand oder der Teil eines menschlichen Körpers, insbesondere eine Hand oder ein Finger, in Y-Richtung in den Füllraum gelangt. Dort könnte er vom Riemen erfasst und zwischen diesen und eine Riemenscheibe eingezogen werden, was erhebliche Beschädigungen und insbesondere Körperverletzungen zur Folge haben kann. Eine dafür ausreichend große Öffnung des Füllraumes, beispielsweise an der Innenseite der Riemens, die im Weiteren als "Eingreifspalt" bezeichnet sein soll, wird häufig ab einer Spaltbreite von 5mm angenommen, wobei die Grenze je nach Anwendungsfall, gegebenenfalls auch nach gesetzlicher Vorgabe, variieren kann. Ein solcher Eingreifspalt muss vermieden werden.

Bekannte Lösungen sehen vor, den Füllraum nach Montage des Riemens mit einem Füllkörper weitgehend "auszufüllen", so dass kein Eingreifspalt entstehen kann. Als nachteilig hat sich dabei herausgestellt, dass der Füllkörper bei einem Riemenwechsel, insbesondere bei dazu erforderlicher Abstandsreduzierung der beiden Achsen der Riemenscheiben, zuvor entnommen und nach der Riemenmontage wieder in den Füllraum eingesetzt werden muss. In der Praxis zeigt sich ferner, dass die bekannten Füllkörper nach ihrer Demontage häufig nicht wieder ordnungsgemäß in den Füllraum eingesetzt werden, da sie oder ihre Verschraubungen verloren gehen oder schlicht Zeit und Mühe gespart werden soll. Ein im Füllraum verbleibender Füllkörper herkömmlicher Art hat ferner den Nachteil, dass sich der Füllraum R bei Vergrößerung des Achsabstandes (etwa zum Spannen des Riemens) vergrößert und dadurch ein Spalt zwischen den Riemenscheiben erzeugt wird, der dann vom Füllkörper nicht mehr ausgefüllt wird und somit gegen Eingriff nicht schützt.

Aus der gattungsgemässen DE 41 11 063 A1 ist ein zweiteiliger Füllkörper für einen Zahnriemenantrieb bekannt, wobei der Füllkörper zur Geräuschdämpfung eng zu den Innenseiten des Zahnriemens beabstandet angeordnet ist und sich beide Füllkörperteile stufenartig überlappen. Ein guter Eingreifschutz ist dadurch jedoch nicht gegeben.

Die DE 102 47 419 A1 beschreibt ein Umschlingungsgetriebe, bei dem eine als Zugmittel dienende Kette teilweise eingefasst ist durch eine Führungsvorrichtung, um seitliche Ausschläge und unerwünschte Querschläge der Kette zu unterbinden. Ein Eingreifschutz ist hier angesichts des Betriebs des Umschlingungsgetriebes an einem üblicherweise eingehausten Verbrennungsmotor nicht thematisiert oder von Bedeutung.

Aus der DE 10 2005 055 754 A1 ist eine Aufnahme für ein Transportaggregat einer Transportvorrichtung bekannt, die jedoch keine besonderen Mittel als Eingreifschutz offenbart.

Andere Lösungen sehen statt eines Füllkörpers die vollständige Einhausung des Riemens vor, wobei dieser dann nachteiligerweise nicht mehr gut einsehbar und hinsichtlich seiner Funktion nicht leicht überprüfbar ist. Ferner muss die Einhausung zum Riemenwechsel komplett entfernt werden, was zeitaufwändig und damit teuer ist.

Aufgabe der Erfindung war es daher, einen verbesserten Eingreifschutz für Riemenantriebe anzubieten, der für einen Riemenwechsel bzw. bei Veränderung des Achsabstands der zugehörigen Riemenscheiben, etwa zum Nachspannen, zum Ausgleich von Fertigungstoleranzen oder zum Einstellen einer Vorspannkraft, nicht demontiert werden muss und auch bei variierenden Achsabständen, insbesondere bei gespanntem Riemen, jederzeit einen sicheren Eingreifschutz darstellt.

Die Aufgabe wird gelöst durch einen Riemenantrieb nach Anspruch 1 bzw. einen zugehörigen Füllkörper nach Anspruch 8. Die Erfindung ist ferner gerichtet auf ein Transportsystem mit erfindungsgemäßem Riemenantrieb nach Anspruch 9, wie es beispielsweise bei Transportwagen eingesetzt wird, und ein Verfahren zum Riemenwechseln. Weitere vorteilhafte Ausführungsformen ergeben sich aus den Unteransprüchen.

Die Erfindung beruht auf der Erkenntnis, dass ein im Füllraum R angebrachter Füllkörper auch bei veränderlichen Achsabständen und beispielsweise zum Riemenwechsel im Füllraum verbleiben kann und diesen zumindest bei gespanntem Riemen stets eingreifsicher ausfüllt, wenn der Füllkörper aus wenigstens zwei relativ zueinander verschieblich ausgebildeten Teilkörpern gebildet wird, die einander überdecken. Ein erster Teilkörper ist dabei ortsfest relativ zur ersten Riemenscheibe angeordnet, während ein zweiter Teilkörper ortsfest relativ zur zweiten Riemenscheibe angeordnet ist, so dass beide Teilkörper bei Veränderung des Achsabstandes relativ zueinander bewegt werden. Die dabei erfindungsgemäß aufrecht erhaltene Überdeckung beider Teilkörper stellt dabei sicher, dass auch bei Veränderung des Achsabstandes kein Spalt in der Größe eines Eingreifspalts im Füllraum entstehen kann.

Der erfindungsgemäße Eingreifschutz ist ausgebildet für einen Riemenantrieb, bei dem eine erste Riemenscheibe auf einer ersten Achse angeordnet ist und einen Riemen treibt, der eine zweite Riemenscheibe umläuft, die ihrerseits auf einer zweiten Achse angeordnet ist. Zwischen den Riemenscheiben und seitlich begrenzt durch die Innenseite des Riemens wird ein Füllraum R definiert, der von einem Füllkörper als Eingreifschutz gefüllt ist. Der Schutz entsteht dadurch, dass ein zwischen dem Füllkörper und der Riemeninnenseite verbleibender Trumspalt unterhalb der definierbaren Breite eines Eingreifspaltes gehalten wird, welche beispielsweise der Breite eines menschlichen Fingers entspricht, so dass ein Finger nicht zwischen den Füllkörper und die Innenseite des Riemens gelangen kann.

Erfindungsgemäß weist der Füllkörper einen ersten, relativ zur ersten Riemenscheibe ortsfesten Teilkörper und einen zweiten, relativ zur zweiten Riemenscheibe ortsfesten Teilkörper auf, wobei beide Teilkörper gegeneinander verschieblich sind. Die Verschieblichkeit erlaubt es, den Achsabstand der beiden Riemenscheiben vorübergehend oder auch wiederholt zu verändern, ohne dass der Füllkörper diese Bewegung blockiert. Dabei überdeckt ein Abschnitt des ersten Teilkörpers in Y-Richtung einen Abschnitt des zweiten Teilkörpers. Die Abmessungen der einander überdeckenden Abschnitte der Teilkörper sind so gewählt, dass die Überdeckung unabhängig vom Achsabstand stets aufrechterhalten bleibt, so dass der Füllraum gegen einen Eingriff, insbesondere einen vollständigen Durchgriff in Y-Richtung, stets geschützt bleibt.

Eine "echte" Überdeckung im Sinne der Erfindung besteht dann, wenn die beiden Teilkörper mit jeweils einem Abschnitt in Y-Richtung so hintereinanderliegen, dass ein den Füllraum in Y-Richtung vollständig durchdringender Spalt zwischen ihnen nicht besteht. Da der Eingreifschutz aber auch trotz eines solchen Spalts gewährleistet wäre, solange dieser kleiner bleibt als ein Eingreifspalt, soll der Begriff "Überdeckung" auch diesen Fall mit einschließen.

Eine bevorzugte Variante der Erfindung sieht dagegen vor, dass Abschnitte beider Teilkörper im Sinne der "echten" Überdeckung in Y-Richtung hintereinanderliegen.

Da die einzelnen Teilkörper des Füllkörpers relativ zueinander beweglich sind, können sie ihre ortsfeste Lage relativ zur jeweiligen Riemenscheibe auch beibehalten, während sich der Achsabstand ändert, um beispielsweise den Riemen zu wechseln oder nachzuspannen. Da eine Demontage der Teilkörper, anders als beim Stand der Technik, dafür nicht mehr nötig ist, können die Teilkörper quasi unverlierbar durchgehend an dem Riemenantrieb befestigt bleiben. Die Aufrechterhaltung eines wirksamen Eingreifschutzes auch nach einem Riemenwechsel ist dadurch zuverlässig sichergestellt.

Zweckmäßigerweise wird die Überdeckung der beiden Teilkörper erreicht, indem wenigstens ein Vorsprung eines Teilkörpers in wenigstens eine Vertiefung des anderen Teilkörpers eintaucht. Bei dieser Variante umschließt die Vertiefung den Vorsprung - in Achsrichtung gesehen - beidseitig. Dort, wo der Vorsprung bei Erweiterung des Achsabstandes einen zusätzlichen Raum bzw. Spalt (Hubspalt) eröffnet, wird dieser in Y-Richtung beidseitig von den Seitenwänden der Vertiefung des anderen Teilkörpers überdeckt, wie auch aus den Figuren deutlich werden wird. Je nach gewähltem Achsabstand verändert sich die Eintauchtiefe, mit der der Vorsprung des einen Teilkörpers in die Vertiefung des anderen Teilkörpers eintaucht. Durch die beidseitige Abdeckung des Hubspaltes ist ein Eingriff in diesen Hubspalt zu keiner Zeit möglich.

Die beiden Trume des Riemens, die den Füllraum umlaufen, liegen mit ihrer Innenseite möglichst nahe an einem oder mehreren Schutzabschnitten des erfindungsgemäßen Füllkörpers, um den zwischen diesen und der Riemeninnenseite bestehenden Spalt (Trumspalt) kleiner als einen Eingreifspalt zu halten. Zweckmäßigerweise wird nach einer vorteilhaften Ausführungsform der Erfindung ein solcher Schutzabschnitt gebildet durch den zuvor beschriebenen Vorsprung, der in die Vertiefung des anderen Teilkörpers eintauchen kann. Der Vorsprung erfüllt dadurch eine Doppelfunktion, nämlich einerseits die Ausbildung der Überdeckung beider Teilkörper in Y-Richtung, andererseits die Ausbildung eines möglichst schmalen Trumspaltes in X-Richtung zwischen der Riemeninnenseite und einem Teilkörper.

Nach einer vorteilhaften Ausführungsform der Erfindung wird der Eingreifschutz entlang jedes Trums des Riemens auf unterschiedliche Weise sichergestellt, je nachdem welcher Trumabschnitt betrachtet wird. Diejenigen Abschnitte der Trume, deren Innenseite mit dem geringen Abstand des Trumspaltes an einem Schutzabschnitt entlang geführt werden, sind durch eben diesen geringen Trumspalt gegen Eingriff in Y-Richtung gesichert. Um eine Änderung des Achsabstandes zuzulassen, kann sich ein Schutzabschnitt jedoch nicht durchgängig entlang der gesamten Innenseite eines Trumes von der ersten zur zweiten Riemenscheibe erstrecken. Stattdessen muss zwischen beiden Teilkörpern die Ausbildung des Hubspaltes möglich sein, der die Relativbewegung beider Teilkörper in Z-Richtung gestattet. Da im Bereich des Hubspaltes kein Schutzabschnitt ausgebildet und folglich auch kein ausreichend schmaler Trumspalt ausgebildet sein kann, ist in diesem Bereich vorgesehen, den Hubspalt und den Riemenrand seitlich abzudecken. Dazu erstreckt sich ein Deckabschnitt eines Teilkörpers in Y-Richtung vor und hinter dem Hubspalt so weit in X-Richtung nach außen, dass neben dem Hubspalt auch der Rand des Riemens mit abgedeckt ist, dieser also beidseitig eingefasst wird. Der Eingreifschutz ergibt sich in diesem Bereich dadurch, dass die seitliche Einfassung ausreichend eng am Riemenrand entlang ausgebildet ist, so dass menschliche Gliedmaßen den seitlichen Rand des Riemens nicht erreichen können, also auch dort kein Eingreifspalt besteht. Da die seitliche Abdeckung zugleich den gesamten Hubspalt abdeckt, ist ein Eingriff bis zur Innenseite des Riemens ebenfalls verwehrt.

Eine vorteilhafte Ausführungsform der Erfindung sieht vor, dass wenigstens ein Teilkörper wenigstens einen im Füllraum angeordneten Kernabschnitt aufweist, der zur Ausbildung eines oder mehrerer Schutzabschnitte an der Innenseite des Riemens ausgebildet ist. In Richtung der Achsen wird der Kernabschnitt beidseitig von den vorgenannten Deckabschnitten abgedeckt, welche den Füllraum in Achsrichtung begrenzen und gegebenenfalls auch einen zwischen den Deckabschnitten bestehenden Hubspalt seitlich abdecken. Die Deckabschnitte erstrecken sich zweckmäßigerweise bis über den Riemenrand, um diesen seitlich einzufassen.

Vorzugsweise sind Kernabschnitt und Deckabschnitte einstückig ausgebildet, um die Anzahl der Teile zu reduzieren und die Montage zu vereinfachen. Als besonders geeignet zur Herstellung der Teilkörper hat sich Polyoxymethylen (POM) erwiesen. Die Herstellung kann beispielsweise mittels Spritzgussverfahren erfolgen. Dieses Material verfügt neben seiner guten Verarbeitbarkeit auch über eine gute elektrische Leitfähigkeit, um ein statisches Aufladen des Riemens und/oder des Füllkörpers zu vermeiden. Da zumindest der Schutzabschnitt eines Teilkörpers den Riemen beim Umlauf auf seiner Innenseite auch gegen Schwingungen und Vibrationen stabilisieren kann und dabei auch führt, wird der Schutzabschnitt, vorzugsweise der gesamte Teilkörper, vollständig aus einem Material mit guten Gleiteigenschaften hergestellt. Diese Eigenschaften sind besonders wichtig bei Transportbändern von Inspektionsanlagen, beispielsweise Röntgeninspektionsanlagen, Track-and-Trace-Systemen oder Waagen.

Die Teilkörper können durch Verschrauben, Verkleben, Einrasten oder auf andere, dem Fachmann bekannte Weise im Füllraum befestigt sein.

Obwohl der Riemen durch den erfindungsgemäßen Füllkörper gut gegen Eingriff gesichert ist, ist er jederzeit gut einsehbar und auf ordnungsgemäße Funktion zumindest visuell überprüfbar. Da auf die aus dem Stand der Technik bekannte Einhausung des Riemens verzichtet werden kann, ist beispielsweise auch eine auf dem Riemen aufgebrachte Typenbezeichnung leicht einsehbar. Auch die Riemenspannung und der Zustand des Riemens bzw. seiner Zähne/Glieder ist leicht überprüfbar, und zumindest eine partielle Riemenreinigung ist ebenfalls leicht möglich.

Ein vorteilhaftes Einsatzgebiet für den erfindungsgemäßen Füllkörper bzw. einen diesen verwendenden Riemenantrieb ist bei Transportsystemen gegeben, bei denen ein Transportband über einen Riemen angetrieben wird.

Ein an einem Motorchassis angeordneter Motor treibt dabei direkt oder indirekt eine erste Riemenscheibe, die über einen Riemen eine zweite Riemenscheibe antreibt, die ihrerseits mit einer das Transportband führenden oder treibenden Rolle direkt oder indirekt gekoppelt ist. Während die erste Riemenscheibe und der erste Teilkörper ortsfest zueinander am Motorchassis befestigt sind, ist der zweite Teilkörper ortsfest zur zweiten Riemenscheibe an einem auch das Transportband tragenden Bandchassis angeordnet.

Bei einer besonders praktischen Ausführungsform solcher Transportsysteme lässt sich der Abstand der parallelen Achsen der beiden Riemenscheiben verändern, indem das Bandchassis relativ zum Motorchassis verschwenkt wird. Dies kann über eine beide Chassis gelenkig verbindende Schwenkachse erfolgen. Auch aufwändigere Schwenkmechanismen, die eine nicht kreisbogenförmige Relativbewegung von Bandchassis und Motorchassis bewirken, sind denkbar. Bei einem solchen Transportsystem nimmt das Bandchassis relativ zum Motorchassis eine Arbeitsposition ein, in der der Achsabstand der beiden Riemenscheiben ein vorgebbares Maß erreicht, bei dem der Riemen eine ausreichende Vorspannung erfährt. In dieser Arbeitsposition bildet sich zwischen dem ersten und zweiten Teilkörper des erfindungsgemäßen Füllkörpers ein gewisser Hubspalt, der durch die den Füllraum seitlich begrenzenden Deckabschnitte gegen einen Eingriff gesichert ist. Im Bereich einer Fuge, die zwischen den jeweiligen seitlichen Abdeckabschnitten der Teilkörper besteht, wird der Eingreifschutz sichergestellt durch den Schutzabschnitt, der unter Ausbildung eines schmalen Trumspalts der Innenseite des Riemens gegenüberliegt.

Um den Riemen zu entnehmen oder auszutauschen, was vorzugsweise werkzeuglos geschehen soll, sieht das erfindungsgemäße Verfahren vor, das Bandchassis relativ zum Motorchassis aus der Arbeits- in eine Löseposition zu verschwenken. Dabei reduziert sich der Achsabstand beider Riemenscheiben, wobei sich beide Teilkörper des erfindungsgemäßen Füllkörpers aufeinander zu bewegen, und der Hubspalt und die zwischen den seitlichen Abdeckabschnitten bestehende Fuge geringer werden. Durch Annäherung beider Riemenscheiben verliert der Riemen seine Spannung und kann abgenommen bzw. ausgetauscht werden. Beim Zurückklappen des Bandchassis in die Arbeitsposition entfernen sich die Riemenscheiben mit ihren jeweils zugehörigen Teilkörpern voneinander unter Aufbau der erforderlichen Riemenvorspannung, wobei jedoch zu keiner Zeit ein Eingreifspalt entsteht. Mit Hilfe des erfindungsgemäßen Füllkörpers lässt sich ein Riemenwechsel werkzeuglos und in wenigen Sekunden durchführen, ohne dass außer dem Riemen selbst weitere Komponenten vom Transportsystem entfernt werden müssten.

Ein derartiges Transportsystem wird insbesondere für Wägesysteme eingesetzt, bei denen das Transportsystem Vorlast für eine Wägezelle bildet.

Der besondere, nicht nur das gezeigte Ausführungsbeispiel betreffende Vorteil der Erfindung liegt darin, dass der aus den beiden Teilkörpern K₁ und K₂ gebildete Eingreifschutz eine Reduzierung oder Erweiterung des Achsabstandes zulässt - etwa, um den Riemen zu wechseln oder zu spannen - ohne dass hierfür Komponenten des Eingreifschutzes demontiert werden müssen. Durch das Eintauchen des zweiten Teilkörpers in den ersten Teilkörper wird diese Relativbewegung ermöglicht, während beide Teilkörper unverlierbar und dauerhaft an der jeweiligen Riemenscheibe bzw. dem zugehörigen Chassis montiert und justiert bleiben können und fortwährend die Entstehung eines Eingreifspalts verhindern.

"Riemen" im Sinne dieser Anmeldung bezeichnet einen zu einer Endlosschleife geschlossenen Strang zur Übertragung einer Zugkraft, wobei der Strang durchgehend flexibel oder auch aus flexibel miteinander verbundenen einzelnen Gliedern als Kette gebildet sein kann. "Riemenantrieb" umfasst daher auch Kettenantriebe.

Eine vorteilhafte Ausführungsform eines erfindungsgemäßen Eingreifschutzes wird nachfolgend anhand eines Figurenbeispiels näher erläutert. Dabei zeigen
- Fig. 1: ein Transportsystem mit Riemenantrieb in Arbeitsposition,
- Fig. 2: den Riemenantrieb des Transportsystems in vergrößerter Darstellung,
- Fig. 3a: den zwischen den Riemenscheiben und dem Riemen gebildeten Füllraum in seitlicher Ansicht,
- Fig. 3b: den Riemenantrieb in seitlicher Ansicht mit eingesetzten Teilkörpern,
- Fig. 4a, 4b: die Teilkörper in unterschiedlicher Relativposition zueinander,
- Fig. 5a, 5b: die Teilkörper in separater Darstellung, und
- Fig. 6a, 6b: ein Transportsystem in Löseposition mit vergrößerter Darstellung des Riemenantriebs.

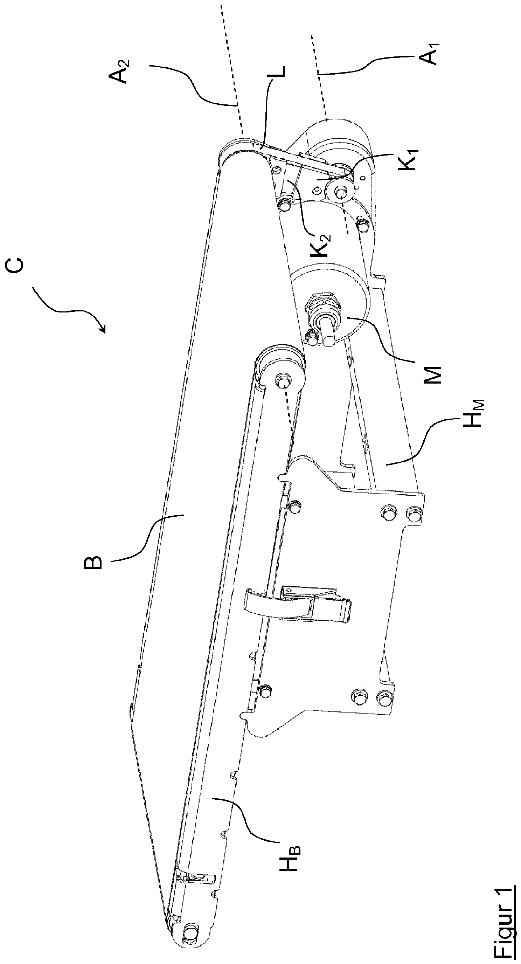

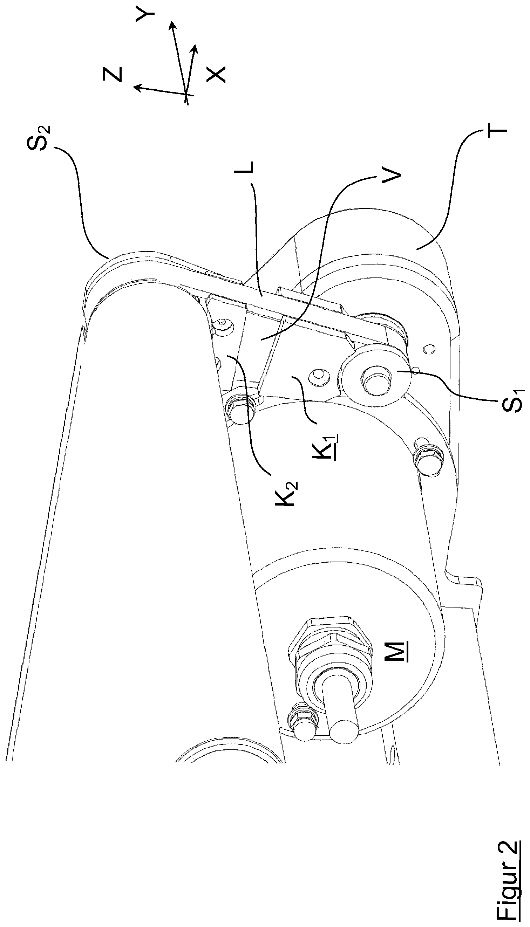

Fig. 1 zeigt in perspektivischer Ansicht ein Transportsystem für den Einsatz in der Inspektionstechnik (beispielsweise Wägetechnik, Röntgentechnik, Track- und Trace-System) . Das Transportsystem C umfasst ein Motorchassis H_{M} und ein verschwenkbar zu diesem angeordnetes Bandchassis H_{B}. Das Motorchassis H_{M} trägt einen Motor M, der über ein in Fig. 2 bezeichnetes Getriebe T eine erste Riemenscheibe S₁ antreibt. Die Riemenscheibe S₁ sitzt auf einer ersten, in Y-Richtung verlaufenden Achse A₁. Die erste Riemenscheibe S₁ treibt über einen Riemen L eine zweite Riemenscheibe S₂ an, die auf einer in einer Z-Richtung oberhalb der ersten Achse A₁ angeordneten zweiten Achse A₂ sitzt, die parallel zur ersten Achse A₁ verläuft. Die zweite Riemenscheibe S₂ ist Teil des Bandchassis H_{B} und ist mit einer Rolle gekoppelt, die ihrerseits ein Förderband B antreibt.

Das Bandchassis H_{B} ist nach Lösen einer Schnellspannverbindung relativ zum Motorchassis H_{M} über einen nicht näher dargestellten Schwenkmechanismus so verschwenkbar, dass sich der Z-Abstand der Achsen A₁ und A₂ dabei verändert. In der in Fig. 1 gezeigten Arbeitsposition ist der Achsabstand so gewählt, dass der um die Riemenscheiben S₁, S₂ geschlungene Riemen L betriebsbereit vorgespannt ist.

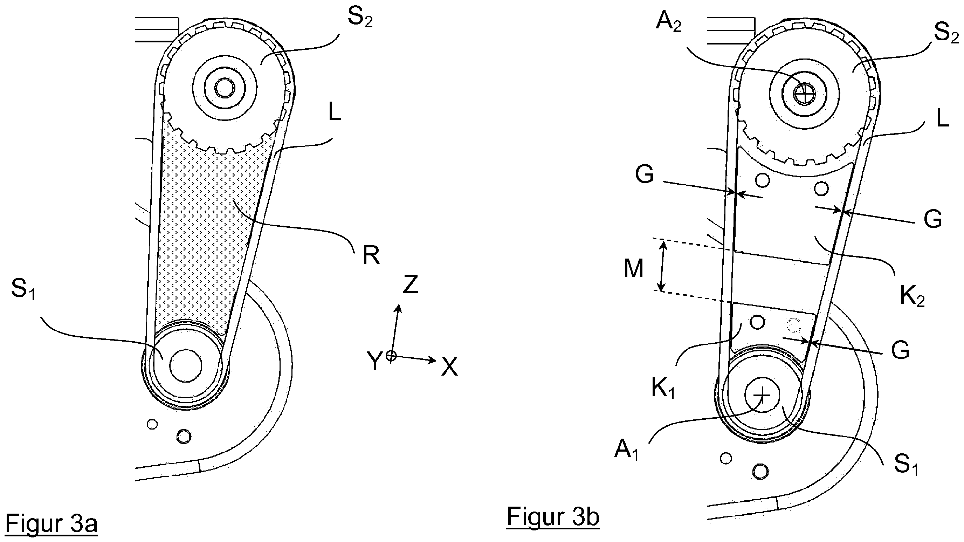

Fig. 2 zeigt den Riemenantrieb des Transportsystems aus Fig. 1 in vergrößerter Darstellung. Die erste Riemenscheibe S₁ des Motorchassis H_{M} begrenzt gemeinsam mit der zweiten Riemenscheibe S₂ des Bandchassis H_{B} und mit dem beide Riemenscheiben umlaufenden Riemen L einen Raum, der in Fig. 3a als Füllraum R vereinfacht dargestellt ist. Im Betrieb des Riemenantriebs soll verhindert werden, dass Gegenstände oder menschliche Gliedmaßen in den Füllraum R gelangen, um Beschädigungen des Antriebs oder Verletzungen eines Bedieners zu vermeiden.

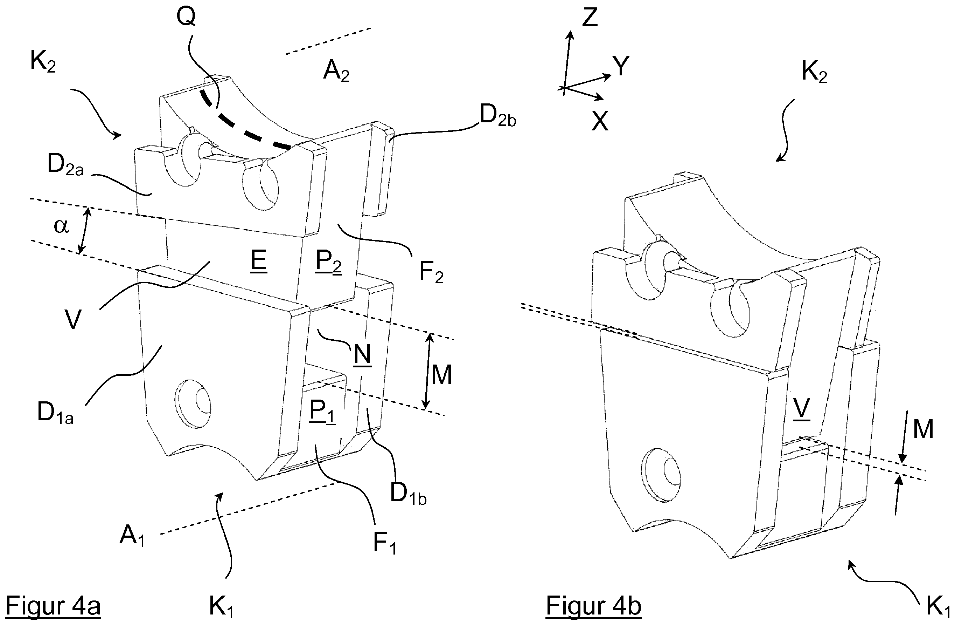

Wie in Fig. 2 und detaillierter in den Figuren 3b und 4a zu sehen ist, sind zu diesem Zweck zwei Teilkörper K₁ und K₂ im Füllraum R positioniert, welche diesen so weit ausfüllen, dass das ungewollte Eindringen insbesondere von menschlichen Gliedmaßen sicher vermieden wird. Ein erster Teilkörper K₁ ist dazu im unteren Teil des Füllraums R und ortsfest relativ zur ersten Riemenscheide S₁ am Motorchassis H_{M} befestigt. Ein zweiter Teilkörper K₂ ist in der oberen Hälfte des Füllraums R angeordnet und relativ zur zweiten Riemenscheibe S₂ ortsfest am Bandchassis H_{B} befestigt.

Fig. 3b zeigt eine vereinfachte Schnittdarstellung der Anordnung der Füllkörper K₁, K₂, wobei auf Schraffuren zur besseren Übersicht verzichtet wurde. Die Schnittebene Q (siehe Fig. 4) liegt auf halber Riemenbreite und verläuft mittig durch den Füllraum R. Der untere erste Teilkörper K₁ schmiegt sich eng an den Umfang bzw. die Kontur der ersten Riemenscheibe S₁ an und erstreckt sich ein wenig in Richtung auf die zweite Riemenscheibe S₂. Dabei bildet der erste Teilkörper K₁ zwischen sich und der Innenseite jedes Trums des Riemens L einen schmalen Trumspalt G aus, der deutlich schmaler ist als die Dicke eines menschlichen Fingers bzw. eines definierbaren Eingreifspalts. Der obere, zweite Teilkörper K₂ ist ähnlich ausgeführt und schmiegt sich an seinem oberen Ende an die Kontur der zweiten Riemenscheibe S₂ an. Ferner erstreckt er sich in Richtung auf die erste Riemenscheibe S₁ und bildet ebenfalls zwischen sich und der Innenseite beider Trume des Riemens L den schmalen Trumspalt G aus.

Zwischen beiden Teilkörpern K₁, K₂ verbleibt ein Hubspalt M, der sich mit Veränderung des Achsabstands A₁ - A₂ verändert. Im Bereich des Hubspalts M liegt der Innenseite des Riemens L kein Körper gegenüber. Um auch in diesem Bereich den ungewollten Eingriff zu verhindern, umfasst der erste Teilkörper Deckabschnitte (D₁ₐ, D_{1b}), wie beispielsweise in Fig. 4a zu sehen ist.

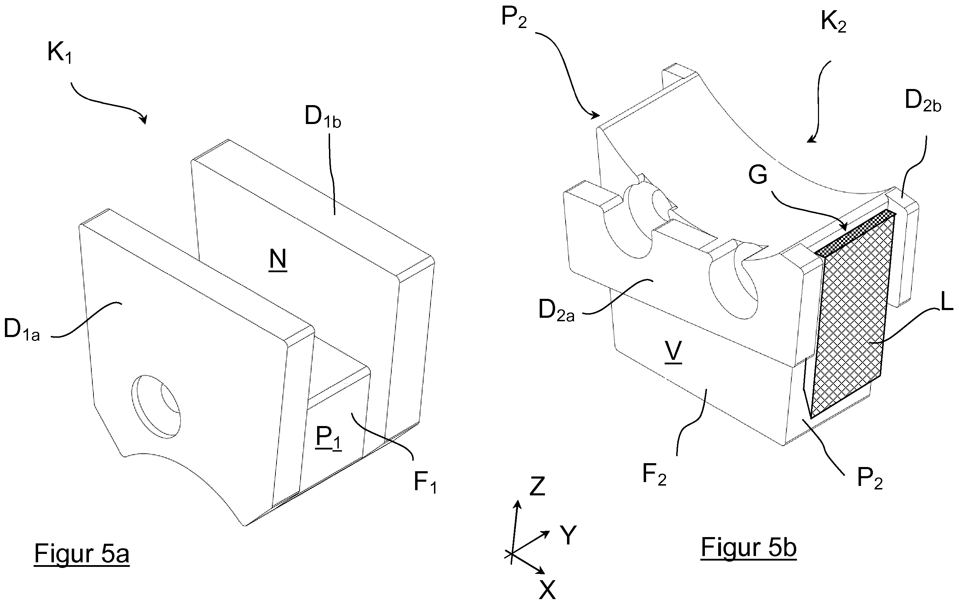

Fig. 4a zeigt die beiden Teilkörper K₁, K₂ in perspektivischer und ungeschnittener Darstellung (die in Fig. 3b gewählte Schnittebene Q ist gestrichelt angedeutet). Ein als Vorsprung V ausgebildeter unterer Abschnitt des zweiten Teilkörpers K₂ ragt mit einer veränderlichen Eintauchtiefe in eine Vertiefung N ein, welche von einem ersten Kernabschnitt F₁ und zwei einander in Y-Richtung gegenüberliegenden Deckabschnitten D₁ₐ, D_{1b} des ersten Teilkörpers K₁ gebildet wird. Der Vorsprung V ist zugleich Teil eines zum zweiten Teilkörper K₂ gehörenden Kernabschnitts F₂. Auch der Kernabschnitt F₂ wird seitlich von zwei einander in Y-Richtung gegenüberliegenden Deckabschnitten D₂ₐ, D_{2b} eingefasst. Der Y-Abstand der Deckabschnitte D₁ₐ bzw. D_{1b} zu D₂ₐ bzw. D_{2b}, ist jeweils geringfügig breiter als die Y-Breite des Riemens L gewählt, von dem in Fig. 5b ein kurzer Abschnitt zu sehen ist.

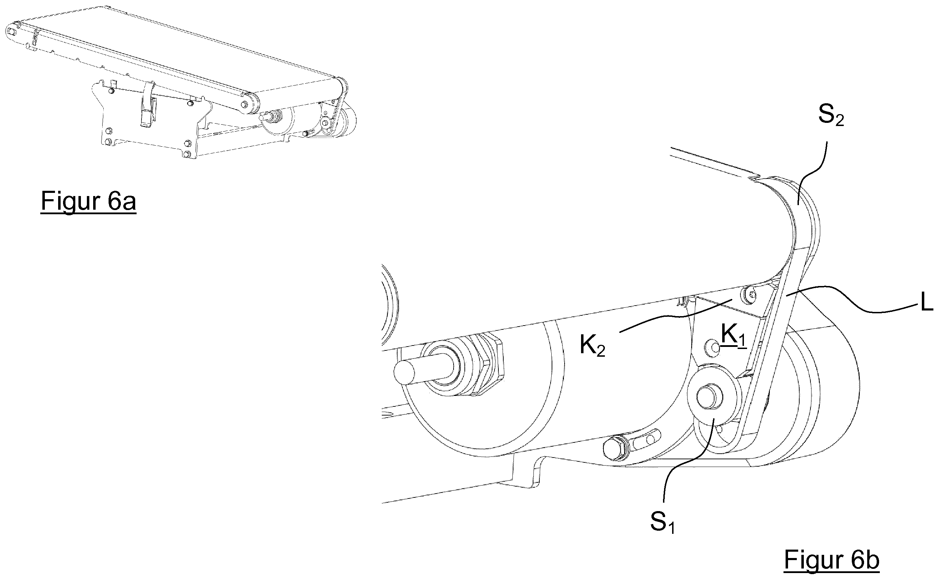

Die in Fig. 4a gezeigte relative Anordnung der Teilkörper K₁ und K₂ zueinander entspricht der in Fig. 1 und Fig. 2 gezeigten Anordnung, bei der das Bandchassis die Arbeitsposition eingenommen hat und der Riemen L die erforderliche Vorspannung aufweist. Zum Lösen oder Wechseln des Riemens L wird das Bandchassis - wie in Fig. 6a und 6b gezeigt ist - relativ zum Motorchassis H_{M} geringfügig aufwärts verschwenkt, nachdem eine die Verschwenkung verhindernde, manuell betätigbare Schnellspannverbindung gelöst wurde. Dadurch reduziert sich der Abstand der Achsen A₁, A₂. Der Riemen L verliert dadurch seine Spannung und kann von den Riemenscheiben S₁, S₂ abgenommen und durch einen anderen Riemen ersetzt werden.

Bei der Reduzierung des Achsabstandes, bei der sich die jeweils ortsfesten Teilkörper K₁, K₂ aufeinander zu bewegen, taucht der Vorsprung V des zweiten Kernabschnitts F₂ des zweiten Teilkörpers K₂ tiefer in die Vertiefung N des ersten Teilkörpers K₁ ein, wobei sich die Spalthöhe des Hubspalts M in Z-Richtung reduziert. Dieser Fall ist in Fig. 4b dargestellt, wo der Vorsprung V vollständig zwischen die beiden Deckabschnitte D₁ₐ, D_{1b} des ersten Teilkörpers eingetaucht ist. Aufgrund der Schwenkbewegung des Bandchassis H_{B} relativ zum Motorchassis H_{M} erfolgt die Eintauchbewegung des Vorsprungs V in den ersten Teilkörper K₁ nicht rein translatorisch, sondern unter einem Schwenkwinkel α. Eine vor dem Eintauchen zwischen den unteren Deckabschnitten D₁ₐ, D_{1b} und den oberen Deckabschnitten D₂ₐ, D_{2b} bestehende konische Fuge E reduziert sich beim Eintauchen entsprechend auf ein geringes Maß.

Der in den Figuren 4a und 4b nicht gezeigte Riemen L wird, wie in Fig. 2 angedeutet ist, im Betrieb zwischen den Deckabschnitten D₁ₐ, D_{1b}, D₂ₐ, D_{2b} und eng an die Kernabschnitte F₁ bzw. F₂ anliegend geführt. Der erfindungsgemäße Eingreifschutz wird dabei durch eine Kombination zweier Schutzmechanismen sichergestellt: Die Kernabschnitte F₁ und F₂ des ersten und zweiten Teilkörpers K₁ und K₂ sind so ausgebildet, dass sie sich bei gespanntem Riemen mit einem Schutzabschnitt P₁, P₂ entlang der Innenseite der Trume des Riemens L erstrecken und dabei den schmalen Trumspalt G ausbilden. Mit Ausnahme des Hubspaltes M, in dem der Riemen innenseitig nicht auf diese Weise abgestützt werden kann, wird der Eingreifschutz sichergestellt durch diesen schmalen Trumspalt G. Der Trumabschnitt, welcher über den Hubspalt M führt, wird stattdessen seitlich an seinem Rand eingefasst von den Deckabschnitten D₁ₐ und D_{1b}, so dass auch in diesem Bereich der Eingriff in den Riemen wirksam verhindert wird.

Die Deckabschnitte D₁ₐ und D_{1b} des ersten Teilkörpers K₁ sind so ausgebildet, dass sie den Riemen L auch jenseits des Hubspaltes M seitlich einfassen, was den Lauf des Riemens zusätzlich stabilisiert und den Eingreifschutz weiter verbessert. Entsprechend sind auch am zweiten Teilkörper K₂ Deckabschnitte D₂ₐ und D_{2b} zur seitlichen Einfassung des (in Fig. 4a nicht gezeigten) Riemens ausgebildet.

Figuren 5a und 5b zeigen die Teilkörper K₁ und K₂ in separater Darstellung. Dabei ist zu sehen, wie der Kernabschnitt F₂ des zweiten Teilkörpers K₂ sowohl den Vorsprung V zum Eintauchen in die Vertiefung N des ersten Teilkörpers als auch die gegenüberliegenden Schutzabschnitte P ausbildet, die den Riemen L mit dem schmalen Trumspalt G führen. In Fig. 5b ist ein kurzer Abschnitt des Riemens L eng anliegend an einen Schutzabschnitt P des zweiten Teilkörpers K₂ gezeigt, wobei zwischen Schutzabschnitt P und der Innenseite des Riemens L der Trumspalt G ausgebildet ist. Seitlich wird der Riemen L eingefasst von den Deckabschnitten D₂ₐ und D_{2b} des zweiten Teilkörpers K₂, die dafür seitlich etwas über den Kernabschnitt F₂ hinausragen.

### Bezugszeichenliste

- A₁, A₂: erste Achse, zweite Achse
- S₁, S₂: erste Riemenscheibe, zweite Riemenscheibe
- L: Riemen
- R: Füllraum
- K: Füllkörper
- E: Fuge
- G: Trumspalt
- M: Hubspalt
- Q: Schnittlinie
- K₁, K₂: erster Teilkörper, zweiter Teilkörper
- P: Schutzabschnitt
- V: Vorsprung
- N: Vertiefung
- D₁ₐ, D_{1b}, D₂ₐ, D_{2b}: Deckabschnitt
- F₁, F₂: Kernabschnitt
- C: Transportsystem
- B: Transportband
- H_{M}: Motorchassis
- H_{B}: Bandchassis
- T: Getriebe

## Patentansprüche

1. Riemenantrieb, bei dem ein von einer ersten, auf einer ersten Achse (A₁) angeordneten Riemenscheibe (S₁) getriebener Riemen (L) eine zweite Riemenscheibe (S₂) treibt, die auf einer von der ersten Achse (A₁) in einer ersten Richtung (Z) beabstandeten und zu dieser parallelen zweiten Achse (A₂) angeordnet ist, wobei sich beide Achsen (A₁, A₂) in einer zur ersten Richtung (Z) senkrechten zweiten Richtung (Y) erstrecken, und sich eine dritte Richtung (X) zur ersten und zweiten Richtung (Z, Y) senkrecht erstreckt,
a) wobei in dem von den Riemenscheiben (S₁, S₂) und der Innenseite des gespannten Riemens (L) umschriebenen Füllraum (R) ein Füllkörper (K) als Eingreifschutz angeordnet ist, und
b) wobei die Breite in X-Richtung eines zwischen einem Schutzabschnitt (P₁, P₂...) des Füllkörpers (K) und der Riemeninnenseite verbleibenden Trumspalts (G) kleiner ist als ein vorgebbares Maß eines menschlichen Körperteils, und
c) wobei der Füllkörper (K) einen ersten, relativ zur ersten Riemenscheibe (S₁) ortsfesten Teilkörper (K₁) und einen relativ zur zweiten Riemenscheibe (S₂) ortsfesten zweiten Teilkörper (K₂) aufweist und wobei beide Teilkörper (K₁, K₂) gegeneinander verschieblich sind, und
d) wobei die beiden Teilkörper (K₁, K₂) in Y-Richtung eine Überdeckung ausbilden,
**dadurch gekennzeichnet**,
e) dass die beiden Teilkörper (K₁, K₂) die Überdeckung ausbilden, indem wenigstens ein Vorsprung (V) des zweiten Teilkörpers (K₂) in wenigstens eine Vertiefung (N) des ersten Teilkörpers (K₁) eintaucht, wobei die Vertiefung (N) den Vorsprung (V) in Achsrichtung gesehen beidseitig umschließt.

2. Riemenantrieb nach Anspruch 1 , **dadurch gekennzeichnet, dass** die Breite des Riemens (L) in Y-Richtung kleiner oder gleich ist
a) als die Breite des Schutzabschnitts (P₁, P₂...) in Y-Richtung, oder
b) als der in Y-Richtung bestehende lichte Abstand zweier den Riemen seitlich einfassenden Deckabschnitte (D₁ₐ und D_{1b} bzw. D₂ₐ und D_{2b}).

3. Riemenantrieb nach dem vorherigen Anspruch, **dadurch gekennzeichnet, dass** die Überdeckung bei einer vorgebbaren Abstandsveränderung der Achsen (A₁, A₂) aufrechterhalten bleibt, indem sich die Eintauchtiefe eines Vorsprungs (V) in eine Vertiefung (N) und damit die Höhe in Z-Richtung eines resultierenden Hubspaltes (M) ändert.

4. Riemenantrieb nach einem der vorigen Ansprüche, **dadurch gekennzeichnet, dass** der Schutzabschnitt (P₁, P₂...) wenigstens teilweise von einem Vorsprung (V) gebildet wird.

5. Riemenantrieb nach einem der vorigen Ansprüche, **dadurch gekennzeichnet, dass** wenigstens ein Abschnitt (D₁ₐ, D_{1b}; D₂ₐ, D_{2b}) des Füllkörpers (K₁, K₂) den Riemen seitlich einfasst.

6. Riemenantrieb nach einem der vorigen Ansprüche, **dadurch gekennzeichnet, dass** die Innenseite jedes Trum-Abschnitts des gespannten Riemens (L) auch während und nach einer Veränderung des Abstands der Achsen (A₁, A₂) innerhalb eines vorgebbaren Maßes stets von wenigstens einem der Teilkörper (K₁, K₂) gegen einen Eingriff geschützt ist, indem
a) ein Abschnitt (D₁ₐ, D_{1b}; D₂ₐ, D_{2b}) eines Teilkörpers den Trum-Abschnitt und einen angrenzenden Teil des Füllraums (R) seitlich abdeckt, und/oder
b) ein Schutzabschnitt (P₁, P₂...) eines Teilkörpers innenseitig des Trum-Abschnitts den Trumspalt (G) ausbildet.

7. Riemenantrieb nach einem der vorigen Ansprüche, **dadurch gekennzeichnet, dass** ein Teilkörper (K₁, K₂) wenigstens einen im Füllraum (R) angeordneten Kernabschnitt (F₁, F₂, P) aufweist, an den in Y-Richtung beidseitig jeweils ein vorzugsweise einstückig mit dem Kernabschnitt verbundener Deckabschnitt (D₁ₐ, D_{1b}; D₂ₐ, D_{2b}) anschließt, wobei der Deckabschnitt den Füllraum in Y-Richtung begrenzt und den Riemenrand zumindest teilweise überdeckt.

8. Füllkörper (K₁, K₂) für einen Riemenantrieb nach einem der vorhergehenden Ansprüche.

9. Transportsystem (C) mit einem Riemenantrieb nach einem der vorigen Ansprüche, **dadurch gekennzeichnet, dass** der Abstand der Achsen (A₁, A₂) zur Entnahme des Riemens (L) verringerbar und zum Vorspannen eines Riemens (L) vergrößerbar ist.

10. Transportsystem nach dem vorhergehenden Anspruch, umfassend
a) ein einen Motor (M), die erste Riemenscheibe (S₁) und den ersten Teilkörper (K₁) aufweisendes Motorchassis (H_{M}), und
b) ein ein Transportband (B), die zweite Riemenscheibe (S₂) und den zweiten Teilkörper (K₂) aufweisendes Bandchassis (H_{B}),
c) wobei der Abstand der Achsen (A₁, A₂) durch Verschwenken des Bandchassis (H_{B}) relativ zum Motorchassis (H_{M}) veränderbar ist.

11. Transportsystem nach dem vorhergehenden Anspruch, **dadurch gekennzeichnet, dass** es Vorlast bildet für einen Wägesensor .

12. Verfahren zum Austausch eines Riemens (L) an einem Riemenantrieb nach einem der Ansprüche 1 bis 8, umfassend folgende Verfahrensschritte:
a) Verringerung des Abstandes der Achsen (A₁, A₂), um eine Vorspannung des Riemens soweit zu reduzieren, dass der Riemen werkzeuglos von wenigstens einer Riemenscheibe (S₁, S₂) abnehmbar ist, wobei sich die Teilkörper (K₁, K₂) aufeinander zu bewegen,
b) Austausch des Riemens,
c) Vergrößerung des Abstandes der Achsen (A₁, A₂), um den Riemen betriebsbereit vorzuspannen,
**dadurch gekennzeichnet**,
d) dass die Teilkörper (K₁, K₂) während der Schritte a) bis c) den Füllraum (R) durchgängig so ausfüllen, dass die Überdeckung erhalten bleibt.

## Claims

1. A belt drive in which a belt (L) driven by a first pulley (S₁) arranged on a first axis (A₁), drives a second pulley (S₂) that is arranged on a second axis (A₂) at a distance from the first axis (A₁) in a first direction (Z) and parallel to the latter, wherein both axes (A₁, A₂) extend in a second direction (Y) that is perpendicular to the first direction (Z), and a third direction (X) extends perpendicularly to the first and second direction (Z, Y),
a) wherein arranged in the filling space (R) that is circumscribed by the pulleys (S₁, S₂) and the inside of the tensioned belt (L) there is a filling body (K) as contact protection, and
b) wherein the width in the X-direction of a belt-run gap (G) that remains between a protective section (P₁, P₂...) of the filling body (K) and the inside of the belt is smaller than a predeterminable dimension of a human body part, and
c) wherein the filling body (K) has a first partial body (K₁), which is stationary relative to the first pulley (S₁), and a second partial body (K₂), which is stationary relative to the second pulley (S₂), and wherein both partial bodies (K₁, K₂) are displaceable with respect to each other, and
d) wherein the two partial bodies (K₁, K₂) form an overlap in the Y-direction,
**characterised in that**
e) the two partial bodies (K₁, K₂) form the overlap **in that** at least one projection (V) of the second partial body (K₂) dips into at least one depression (N) of the first partial body (K₁), wherein the depression (N) surrounds the projection (V) on both sides viewed in the axial direction.

2. A belt drive according to claim 1, **characterised in that** the width of the belt (L) in the Y-direction is smaller than or equal to
a) the width of the protective section (P₁, P₂...) in the Y-direction, or
b) the clear distance that exists in the Y-direction between two cover sections (D₁ₐ and D_{1b}, and D₂ₐ and D_{2b} respectively) laterally bordering the belt.

3. A belt drive according to the previous claim, **characterised in that** the overlap is maintained when there is a predeterminable change in the distance between the axes (A₁, A₂) **in that** the depth to which a projection (V) dips into a depression (N) and thus the height in the Z-direction of a resultant lift gap (M) changes.

4. A belt drive according to one of the previous claims, **characterised in that** the protective section (P₁, P₂...) is formed at least in part by a projection (V).

5. A belt drive according to one of the previous claims, **characterised in that** at least one section (D₁ₐ, D_{1b}; D₂ₐ, D_{2b}) of the filling body (K₁, K₂) laterally borders the belt.

6. A belt drive according to one of the previous claims, **characterised in that** the inside of each belt-run section of the tensioned belt (L) is always protected by at least one of the partial bodies (K₁, K₂) against contact even during and after a change in the distance between the axes (A₁, A₂), within a predeterminable dimension, **in that**
a) a section (D₁ₐ, D_{1b}; D₂ₐ, D_{2b}) of a partial body laterally covers the belt-run section and an adjacent portion of the filling space (R), and/or
b) a protective section (P₁, P₂...) of a partial body forms the belt-run gap (G) on the inside of the belt-run section.

7. A belt drive according to one of the previous claims, **characterised in that** a partial body (K₁, K₂) has at least one core section (F₁, F₂, P) which is arranged in the filling space (R) and following on from which in the Y-direction on both sides there is a respective cover section (D₁ₐ, D_{1b}; D₂ₐ, D_{2b}) preferably connected in one piece to the core section, wherein the cover section delimits the filling space in the Y-direction and overlaps the edge of the belt at least in part.

8. A filling body (K₁, K₂) for a belt drive according to one of the preceding claims.

9. A transport system (C) having a belt drive according to one of the previous claims, **characterised in that** the distance between the axes (A₁, A₂) can be decreased for removal of the belt (L) and can be increased for pretensioning of a belt (L).

10. A transport system according to the preceding claim, comprising
a) a motor chassis (H_{M}) that has a motor (M), the first pulley (S₁) and the first partial body (K₁), and
b) a band chassis (H_{B}) that has a transport band (B), the second pulley (S₂) and the second partial body (K₂),
c) wherein the distance between the axes (A₁, A₂) can be changed by pivoting the band chassis (H_{B}) relative to the motor chassis (H_{M}).

11. A transport system according to the preceding claim, **characterised in that** it forms a preload for a weighing sensor.

12. A method for exchanging a belt (L) on a belt drive according to one of claims 1 to 8, comprising the following method steps:
a) decrease of the distance between the axes (A₁, A₂) in order to reduce a pretensioning of the belt to such an extent that the belt can be removed from at least one pulley (S₁, S₂) without tools, wherein the partial bodies (K₁, K₂) move towards each other,
b) exchange of the belt,
c) increase of the distance between the axes (A₁, A₂) in order to pretension the belt so that it is ready for operation,
**characterised in that**
d) the partial bodies (K₁, K₂) continuously fill up the filling space (R) during steps a) to c) so that the overlap is preserved.

## Revendications

1. Entraînement par courroie, dans lequel une courroie (L) entraînée par une première poulie de courroie (S₁) agencée sur un premier axe (A₁) entraîne une deuxième poulie de courroie (S₂), qui est agencée sur un deuxième axe (A₂) espacé du premier axe (A₁) dans une première direction (Z) et parallèle à celui-ci, dans lequel les deux axes (A₁, A₂) s'étendent dans une deuxième direction (Y) perpendiculaire à la première direction (Z), et une troisième direction (X) s'étend perpendiculairement à la première et deuxième direction (Z, Y),
a) dans lequel un corps de remplissage (K) est agencé en tant que protection contre la mise en prise dans l'espace de remplissage (R) décrit par les poulies de courroie (S₁, S₂) et la face intérieure de la courroie tendue (L), et
b) dans lequel la largeur dans la direction X d'une fente de brin (G) restant entre une section de protection (P₁, P₂ ...) du corps de remplissage (K) et de la face intérieure de courroie est inférieure à une mesure prédéfinissable d'une partie de corps humain, et
c) dans lequel le corps de remplissage (K) présente un premier corps partiel (K₁) stationnaire par rapport à la première poulie de courroie (S₁) et un deuxième corps partiel (K₂) stationnaire par rapport à la deuxième poulie de courroie (S₂) et dans lequel les deux corps partiels (K₁, K₂) sont déplaçables l'un par rapport à l'autre, et
d) dans lequel les deux corps partiels (K₁, K₂) forment un recouvrement dans la direction Y,
**caractérisé en ce que**
e) les deux corps partiels (K₁, K₂) forment le recouvrement, par le fait qu'au moins une saillie (V) du deuxième corps partiel (K₂) plonge dans au moins un premier renfoncement (N) du premier corps partiel (K₁), dans lequel le renfoncement (N) entoure la saillie (V) des deux côtés vu dans la direction axiale.

2. Entraînement par courroie selon la revendication 1, **caractérisé en ce que** la largeur de la courroie (L) dans la direction Y est inférieure ou égale
a) à la largeur de la section de protection (P₁, P₂ ...) dans la direction Y ou
b) à la distance libre existant dans la direction Y de deux sections de recouvrement (D₁ₐ et D_{1b} ou D₂ₐ et D_{2b}) bordant latéralement la courroie.

3. Entraînement par courroie selon la revendication précédente, **caractérisé en ce que** le recouvrement reste conservé lors d'un changement de distance prédéfinissable des axes (A₁, A₂), par le fait que la profondeur de plongée d'une saillie (V) dans un renfoncement (N) et ainsi la hauteur dans la direction Z d'une fente de levage en résultant (M) change.

4. Entraînement par courroie selon l'une quelconque des revendications précédentes, **caractérisé en ce que** la section de protection (P₁, P₂ ...) est formée au moins en partie par une saillie (V).

5. Entraînement par courroie selon l'une quelconque des revendications précédentes, **caractérisé en ce qu'**au moins une section (D₁ₐ, D_{1b} ; D₂ₐ, D_{2b}) du corps de remplissage (K₁, K₂) borde latéralement la courroie.

6. Entraînement par courroie selon l'une quelconque des revendications précédentes, **caractérisé en ce que** la face intérieure de chaque section de brin de la courroie tendue (L) est toujours protégée contre la mise en prise par au moins un des corps partiels (K₁, K₂) même pendant et après un changement de la distance des axes (A₁, A₂) à l'intérieur d'une mesure prédéfinissable, par le fait que
a) une section (D₁ₐ, D_{1b} ; D₂ₐ, D_{2b}) d'un corps partiel couvre latéralement la section de brin et une partie adjacente de l'espace de remplissage (R), et/ou
b) une section de protection (P₁, P₂ ...) forme un corps partiel côté intérieur de la section de brin de la fente de brin (G).

7. Entraînement par courroie selon l'une quelconque des revendications précédentes, **caractérisé en ce qu'**un corps partiel (K₁, K₂) présente au moins une section centrale (F₁, F₂, P) agencée dans l'espace de remplissage (R), au niveau de laquelle se raccorde des deux côtés dans la direction Y respectivement une section de recouvrement (D₁ₐ, D_{1b} ; D₂ₐ, D_{2b}) reliée de préférence d'un seul tenant à la section centrale, dans lequel la section de recouvrement limite l'espace de remplissage dans la direction Y et recouvre au moins en partie le bord de courroie.

8. Corps de remplissage (K₁, K₂) pour un entraînement par courroie selon l'une quelconque des revendications précédentes.

9. Système de transport (C) avec un entraînement par courroie selon l'une quelconque des revendications précédentes, **caractérisé en ce que** la distance des axes (A₁, A₂) peut être réduite pour le prélèvement de la courroie (L) et peut être augmentée pour la précontrainte d'une courroie (L).

10. Système de transport selon la revendication précédente, comprenant
a) un châssis de moteur (H_{M}) présentant un moteur (M), la première poulie de courroie (S₁) et le premier corps partiel (K₁), et
b) un châssis de bande (H_{B}) présentant une bande transporteuse (B), la deuxième poulie de courroie (S₂) et le deuxième corps partiel (K₂),
c) dans lequel la distance des axes (A₁, A₂) est modifiable par pivotement du châssis de bande (H_{B}) par rapport au châssis de moteur (H_{M}).

11. Système de transport selon la revendication précédente, **caractérisé en ce qu'**il forme une précharge pour le capteur de pesage.

12. Procédé de remplacement d'une courroie (L) au niveau d'un entraînement par courroie selon l'une quelconque des revendications 1 à 8, comprenant les étapes suivantes :
a) diminution de la distance des axes (A₁, A₂) pour réduire une précontrainte de la courroie jusqu'à ce que la courroie puisse être retirée sans outil d'au moins une poulie de courroie (S₁, S₂), dans lequel les corps partiels (K₁, K₂) se déplacent l'un vers l'autre,
b) remplacement de la courroie,
c) augmentation de la distance des axes (A₁, A₂) pour précontraindre la courroie opérationnellement,
caractérisé en ce
d) que les corps partiels (K₁, K₂) remplissent continûment l'espace de remplissage (R) pendant les étapes a) à c) de telle sorte que le recouvrement reste conservé.
